(19) Europäisches Patentamt
European Patent Office
Office européen des brevets

(11) **EP 3 609 031 B1**

(12) **EUROPÄISCHE PATENTSCHRIFT**

(45) Veröffentlichungstag und Bekanntmachung des Hinweises auf die Patenterteilung:
**09.06.2021   Patentblatt 2021/23**

(51) Int Cl.:
***H02H 3/16*** *(2006.01)*      ***H02H 3/33*** *(2006.01)*

(21) Anmeldenummer: **19190085.1**

(22) Anmeldetag: **05.08.2019**

(54) **VERFAHREN ZUM BETREIBEN EINES ELEKTRISCHEN GERÄTES IN EINEM WECHSELSTROMNETZ**

METHOD FOR OPERATING AN ELECTRICAL DEVICE IN AN ALTERNATING CURRENT NETWORK

PROCÉDÉ DE FONCTIONNEMENT D'UN APPAREIL ÉLECTRIQUE DANS UN RÉSEAU DE COURANT ALTERNATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2018   DE 102018006181**

(43) Veröffentlichungstag der Anmeldung:
**12.02.2020   Patentblatt 2020/07**

(73) Patentinhaber: **Kostal Industrie Elektrik GmbH 58513 Lüdenscheid (DE)**

(72) Erfinder:
• **HASSEL, Thomas
  44309 Dortmund (DE)**
• **LOH, Thomas
  58095 Hagen (DE)**

(74) Vertreter: **Kerkmann, Detlef
Leopold Kostal GmbH & Co. KG
An der Bellmerei 10
58513 Lüdenscheid (DE)**

(56) Entgegenhaltungen:
WO-A1-2008/009903      DE-A1-102007 031 342
DE-A1-102014 221 658

EP 3 609 031 B1

**Beschreibung**

Die Erfindung betrifft ein Verfahren zum Betreiben eines elektrischen Gerätes in einem Wechselstromnetz, wobei das Gerät mit dem Wechselstromnetz über eine ein- oder mehrphasige Anschlussleitung verbunden ist, wobei mittels eines der Anschlussleitung innerhalb des Gerätes zugeordneten Stromsensors Fehler- und/oder Ableitströme auf der Anschlussleitung kontinuierlich als Sensorwert erfasst werden.

Beim Betreiben elektrischer Geräte in einem Wechselstromnetz können durch Fehler innerhalb dieser Geräte oder auch durch konstruktionsbedingte Gegebenheiten des jeweiligen Geräts sogenannte Fehlerströme oder Ableitströme auftreten, die eine Gefahr für Personen in der Umgebung des Gerätes darstellen können.

Im Zusammenhang mit der vorliegenden Erfindung sind als elektrische Geräte hier insbesondere Frequenzumrichter und Wechselrichter angesprochen, die im Zuge der fortschreitenden Einführung alternativer Energiekonzepte vermehrt in gewöhnlichen Haushaltsstromnetzen zum Einsatz kommen.

So wird z.B. bei den inzwischen weit verbreiteten häuslichen Photovoltaikanlagen der von den auf einem Hausdach installierten Solarmodulen erzeugte Gleichstrom mittels eines Wechselrichters in Wechselstrom umgewandelt, der innerhalb des Haushalts direkt verwendet oder in das öffentliche Stromnetz eingespeist werden kann. In sogenannten Blockheizkraftwerken wird dagegen Wechselstrom mittels eines etwa durch einen Verbrennungsmotor angetriebenen Generators erzeugt. Die Frequenz des durch den Generator erzeugten Wechselstroms wird dann durch einen Frequenzumrichter in einen Wechselstrom mit der üblichen Haushalts-Netzfrequenz von 50 bzw. 60 Hertz umgewandelt.

Beim Betreiben solcher Frequenzumrichter und Wechselrichter können, wie bereits erwähnt, Fehlerströme oder Ableitströme auftreten. Fehlerströme haben dabei überwiegend ohmschen Charakter. Die Ursache sind meist Isolationsfehler zwischen spannungsführenden Teilen und Erde in einem Gerät. Auch wenn eine Person einen aktiven Netzleiter berührt, fließt ein ohmscher Fehlerstrom zur Erde. Ableitströme sind dagegen betriebsbedingte Ströme überwiegend kapazitiver Art und fließen zum Beispiel aufgrund von Entstörmaßnahmen durch Kondensatoren in EMV-Filtern oder über die Kapazität langer abgeschirmter Leitungen zur Erde. Fehlerströme und Ableitströme unterscheiden sich also zwar nach ihrer Ursache, nicht jedoch in ihren Auswirkungen insbesondere auf Personen oder Messeinrichtungen, so dass im Folgenden der Einfachheit halber nur noch der verallgemeinerte Begriff Fehlerstrom verwendet wird, auch wenn dieser seiner Ursache nach eigentlich als Ableitstrom zu bezeichnen wäre.

Da Fehlerströme in Wechselstromnetzen Personen beim Berühren elektrischer Betriebsmittel gefährden können, werden als Schutzmaßnahme in elektrischen Anlagen, insbesondere in Haushalts-Stromnetzen Schutzeinrichtungen eingesetzt, die in der Regel an zentraler Stelle, zumeist direkt in der Hauptverteilung des elektrischen Wechselstromnetzes installiert sind. Üblicherweise handelt es sich dabei um sogenannte Fehlerstrom-Schutzschalter vom Typ A, deren Wirkungsweise darauf beruht, dass im fehlerfreien Betrieb einer elektrischen Anlage die vektorielle Summe der Ströme auf allen stromführenden Leitern einer Zuleitung gleich Null ist und somit auch kein Magnetfeld in der Umgebung der Zuleitung existiert. Entsteht etwa auf Grund eines Isolationsfehlers ein Fehlerstrom, der außerhalb der Zuleitung über einen Körper bzw. über Erde abfließt, ergibt sich ein Differenzstrom zwischen den verschiedenen Leitern der Zuleitung. Das durch diesen Differenzstrom hervorgerufene, veränderliche Magnetfeld induziert in dem Fehlerstrom-Schutzschalter sekundärseitig einen Strom, der ein Schaltglied auslöst, welches wiederum die fehlerbehaftete Zuleitung trennt.

Solche Fehlerstrom-Schutzschalter vom Typ A sind prinzipbedingt nur in der Lage sinusförmige Wechselfehlerströme und in gewissem Umfang auch solche Fehlerströme, die einen nicht rein sinusförmigen, sondern einen pulsierenden zeitlichen Verlauf aufweisen, zu erfassen.

Die beim Betreiben elektrischer Geräte wie insbesondere Frequenzumrichter und Wechselrichter auftretenden Fehlerströme können jedoch auch reine Gleichstromanteile enthalten, die durch Fehlerstrom-Schutzschalter vom Typ A nicht erfasst werden können. Darüber hinaus haben diese Gleichstromanteile aber auch noch die fatale Eigenschaft, dass sie einen in dem Wechselstromnetz an zentraler Stelle installierten Fehlerstrom-Schutzschalter vom Typ A in seiner Funktion derart beeinträchtigen können, dass dieser seine Schutzfunktion auch bezüglich aller anderen Geräte in dem betreffenden Wechselstromnetz nicht mehr erfüllen kann.

Die DE 10 2014 221 658 A1 zeigt ein Verfahren gemäß dem Oberbegriff des Patentanspruchs 1, bei dem eine Fehlerstromschutzeinrichtung sowohl auf AC-förmige als auch auf DC-förmige Fehlerströme empfindlich ist. Dabei werden die AC-Anteile im Fehlerstrom durch einen Summenstromwandler erfasst, dessen induzierte Spannung in seiner Sekundärspule ein Maß des Fehlerstroms ist. Die DC-Anteile werden detektiert, indem man eine Sättigung des Wandlermagneten des Summenstromwandlers durch Impedanzmessung feststellt.

Die DE 10 2007 031 342 A1 zeigt ein Verfahren, bei dem die Verlaufsform eines Fehlerstroms durch statistische Analyse ermittelt wird. Basierend auf dieser Analyse wird ein Schwellwert zum Auslösen des Fehlerstromschalters angepasst.

Bei dem Verfahren gemäß der WO 2008/009903 A1 wird die Kurvenform des Fehlerstroms ausgewertet, indem RMS Werte der positiven und negativen Kurvenanteile miteinander verglichen werden.

Dem Verfahren gemäß der vorliegenden Erfindung liegt die Aufgabe zugrunde, ein elektrisches Gerät, das innerhalb eines durch einen an zentraler Stelle installierten Fehlerstrom-Schutzschalter vom Typ A abgesicherten Wechselstromnetzes betrieben wird, so betreiben zu können, dass die Funktion des Fehlerstrom-Schutzschalters vom Typ A nicht beeinträchtigt wird, dass aber gleichzeitig auch eine hohe Verfügbarkeit des elektrischen Gerätes gegeben ist.

Dies gelingt erfindungsgemäß dadurch, dass aus den erfassten Sensorwerten ein zeitlicher Mittelwert und ein Effektivwert gebildet werden, dass aus dem Quotienten aus dem Mittelwert und dem Effektivwert ein Kriterium zum Abschalten des Gerätes gebildet wird, und dass das Gerät von dem Wechselstromnetz getrennt wird, wenn das Kriterium erfüllt ist.

Die Erfindung macht sich die Erkenntnis zu Nutze, dass selbst dann, wenn Fehlerströme auf der Anschlussleitung Gleichstromanteile enthalten, die für sich allein die Funktion des Fehlerstrom-Schutzschalters vom Typ A beeinträchtigen würden, das gleichzeitige Auftreten von Wechselstromanteilen diese negative Beeinflussung wieder aufheben kann. Dadurch kann das Gerät in bestimmten Fällen weiter am Wechselstromnetz betrieben werden, in denen bei bisher verwendeten Verfahren, die auf einer getrennten Betrachtung der Gleichstrom- und Wechselstromanteile beruhen, ein Abschalten des Geräts zwingend erforderlich wäre.

Ein für die Praxis sehr einfach handhabbares Kriterium zum Abschalten des Gerätes kann definiert werden, indem der Quotient aus dem Mittelwert und dem Effektivwert der erfassten Sensorwerte berechnet und für diesen Quotienten ein oberer Grenzwert festgelegt wird. Überschreitet der Quotient diesen Grenzwert, so wird das Gerät von dem Wechselstromnetz getrennt. Die Höhe des Grenzwertes wird in Kenntnis des konkreten Aufbaus des Gerätes und der möglichen Kurvenformen der Fehlerströme so festgelegt, dass eine bestmögliche Vereinbarung von Verfügbarkeit und Sicherheit des. Gerätes gegeben ist.

Ein oberer Grenzwert im Bereich zwischen 0,6 und 0,8 für den Quotienten aus dem Mittelwert und dem Effektivwert der erfassten Sensorwerte liefert in dieser Hinsicht in den meisten Fällen gute Ergebnisse.

Nachfolgend ist die Erfindung anhand eines Ausführungsbeispiels für den Ablauf des erfindungsgemäßen Verfahrens erläutert.

Zunächst wird in einem innerhalb des elektrischen Gerätes vorhandenen Stromsensor, der als Differenzstromsensor alle aktiven Leiter der elektrischen Anschlussleitung des Gerätes umfasst, der durch Fehler- und/oder Ableitströme auf der Anschlussleitung hervorgerufene Differenzstrom kontinuierlich als Sensorwert i(t) erfasst.

Aus den Sensorwerten i(t) werden zum einen ein zeitlicher Mittelwert $I_{AV}$ und zum anderen ein Effektivwert $I_{RMS}$ gebildet. Dabei ist der zeitliche Mittelwert $I_{AV}$ als arithmetischer Mittelwert über eine Periode $T_P$ definiert, also

$$I_{AV} = \frac{1}{Tp} \int_0^{Tp} i(t)dt$$

Der Effektivwert $I_{RMS}$ ist definiert als quadratischer Mittelwert über eine Periode $T_P$, also

$$I_{RMS} = \sqrt{\frac{1}{Tp} \int_0^{Tp} i^2(t)dt}$$

Die beiden Mittelwerte $I_{AV}$ und $I_{RMS}$ werden fortlaufend aktualisiert und aus den jeweils praktisch gleichzeitig gebildeten Mittelwerten wird der Quotient

$$Q = \frac{I_{AV}}{I_{RMS}}$$

berechnet. Je nachdem, wie groß nun die Gleichstrom- und Wechselstromanteile des Fehlerstroms jeweils sind, kann der Quotient Q Werte zwischen "0" und "1" annehmen.

Der so berechnete Quotient Q wird unter Berücksichtigung der nachfolgend dargelegten Betrachtung zur Bildung eines Kriteriums zum Abschalten des Gerätes herangezogen.

Bei einem Fehlerstrom ohne Gleichstromanteil, im Idealfall einem rein sinusförmigen Fehlerstrom, ist der arithmetische Mittelwert $I_{AV}$ gleich Null und der Effektivwert $I_{RMS}$ hat einen Wert größer Null, so dass der Quotient Q in diesem Fall den Wert "0" annimmt.

Wird nun einem rein sinusförmigen Fehlerstrom ein Gleichstromanteil überlagert, so steigt der zeitliche Mittelwert $I_{AV}$ entsprechend dieses Gleichstromanteils an. Damit steigt aber auch der Effektivwert $I_{RMS}$ und mithin auch der Quotient Q. Bei einem Fehlerstrom mit einem gegenüber dem Gleichstromanteil vernachlässigbar kleinen Wechselstromanteil nähert sich Q dem Wert "1 ".

In dem allgemeinen Fall, bei dem sowohl Gleichstrom- als auch Wechselstromanteile des Fehlerstroms in nicht vernachlässigbarer Größenordnung vorhanden sind, hat sich gezeigt, dass bei einem Wert des Quotienten Q zwischen 0 und einem oberen Grenzwert $G_Q$ zwischen 0,6 und 0,8 bei einer Vielzahl von Geräten und möglichen Kurvenformen der Fehlerströme die Wechselstromanteile gegenüber den Gleichstromanteilen groß genug sind, um eine mögliche negative Beeinflussung eines Fehlerstrom-Schutzschalters vom Typ A durch den Gleichstromanteil zu kompensieren.

Es wird daher für die Zwecke des vorliegenden Verfahrens als Kriterium zum Abschalten des Gerätes definiert, dass eine Trennung des Gerätes von dem Wechselstromnetz dann erfolgt, wenn der Quotient Q einen Wert größer oder gleich einem festgelegten Grenzwert $G_Q$ aus dem genannten Bereich annimmt.

In der praktischen Umsetzung des erfindungsgemäßen Verfahrens erfolgen die beschriebenen Berechnungen innerhalb eines Mikrocontrollers. Die kontinuierlich erfassten Sensorwerte i(t) werden dann mittels eines Analog-Digital-Wandlers in zeitdiskrete Sensorwerte i(t) umgewandelt, und diese dem Mikrocontroller zur Weiterverarbeitung zugeführt.

In einer vorteilhaften Weiterbildung des erfindungsgemäßen Verfahrens können zur Erhöhung der Sicherheit weitere Kriterien zum Abschalten des Gerätes definiert werden. So deuten z.B. sprunghaft ansteigende Fehlerströme auf das Ausbilden eines Fehlers oder die Berührung aktiver Teile durch eine Person hin. Es werden daher zur Erweiterung des vorliegenden Verfahrens weitere Kriterien zum Abschalten des Gerätes definiert. Zur Verbesserung des Personenschutzes ist die Erkennung einer sprunghaften Änderung des Fehlerstroms von mindestens 30 Milliampere und eine daraus resultierende Trennung des Gerätes von dem Wechselstromnetz in weniger als 0,3 Sekunden vorgesehen. Dabei kann eine Änderung des Fehlerstroms z.B. dann als sprunghaft gelten, wenn sie sich in einer Zeit von weniger als 5 Millisekunden einstellt.

Das erfindungsgemäße Verfahren wird vorteilhaft beim Betreiben eines Frequenzumrichters oder Wechselrichters in einem Wechselstromnetz verwendet, das durch einen an zentraler Stelle installierten Fehlerstrom-Schutzschalter vom Typ A abgesichert ist.

**Patentansprüche**

1. Verfahren zum Betreiben eines elektrischen Gerätes in einem Wechselstromnetz, wobei das Gerät mit dem Wechselstromnetz über eine ein- oder mehrphasige Anschlussleitung verbunden ist, wobei mittels eines der Anschlussleitung innerhalb des Gerätes zugeordneten Stromsensors Fehler- und oder Ableitströme auf der Anschlussleitung kontinuierlich als Sensorwert i(t) erfasst werden, **dadurch gekennzeichnet, dass** aus den erfassten Sensorwerten i(t) ein zeitlicher Mittelwert ($I_{AV}$) und ein Effektivwert ($I_{RMS}$) gebildet werden, dass aus dem Quotienten (Q) aus dem Mittelwert ($I_{AV}$) und dem Effektivwert ($I_{RMS}$) ein Kriterium zum Abschalten des Gerätes gebildet wird, und dass das Gerät von dem Wechselstromnetz getrennt wird, wenn das Kriterium erfüllt ist.

2. Verfahren nach Anspruch 1, **dadurch gekennzeichnet, dass** das Gerät von dem Wechselstromnetz getrennt wird, wenn der Quotient (Q) einen Wert größer oder gleich einem festgelegten Grenzwert ($G_Q$) annimmt.

3. Verfahren nach Anspruch 2, **dadurch gekennzeichnet, dass** der Grenzwert ($G_Q$) für den Quotienten (Q) auf einen Wert zwischen 0,6 und 0,8 festcieleat ist.

4. Verfahren nach einem der Ansprüche 1 bis 3, **dadurch gekennzeichnet, dass** das Gerät in weniger als 0,3 Sekunden von dem Wechselstromnetz getrennt wird, wenn der Sensorwert i(t) sich sprunghaft um mindestens 30 Milliampere ändert.

5. Verfahren nach einem der Ansprüche 1 bis 4, **dadurch gekennzeichnet, dass** die kontinuierlich erfassten Sensorwerte i(t) mittels eines Analog-Digital-Wandlers in zeitdiskrete Sensorwerte i(t) umgewandelt, und diese einem Mikrocontroller zugeführt werden, in dem dann die entsprechenden Berechnungen vorgenommen werden.

6. Verwendung eines Verfahrens nach einem der vorhergehenden Ansprüche beim Betreiben eines elektrischen Gerätes in einem durch einen an zentraler Stelle installierten Fehlerstrom-Schutzschalter vom Typ A abgesicherten Wechselstromnetz.

7. Verwendung nach Anspruch 6, **dadurch gekennzeichnet, dass** das elektrische Gerät einen Frequenzumrichter und/oder einen Wechselrichter umfasst.

**Claims**

1. Method for operating an electrical device in an AC mains, the device being connected to the AC mains via a single-phase or polyphase connecting line, fault currents and/or leakage currents on the connecting line being continuously detected as sensor value i(t) by means of a current sensor assigned to the connecting line within the device, **characterized in that** a time average value ($I_{AV}$) and an effective value ($I_{RMS}$) are formed from the detected sensor values i(t), **in that** a criterion for switching off the device is formed from the quotient (Q) of the average value ($I_{AV}$) and the effective value ($I_{RMS}$), and **in that** the device is disconnected from the AC mains when the criterion is fulfilled.

2. Method according to claim 1, **characterized in that** the apparatus is disconnected from the AC mains when the quotient (Q) assumes a value greater than or equal to a predetermined limit value (Go).

3. Method according to claim 2, **characterized in that** the limit value (GQ) for the quotient (Q) is fixed at a value between 0,6 and 0,8.

4. Method according to any one of claims 1 to 3, **characterized in that** the device is disconnected from the AC mains in less than 0,3 seconds if the sensor value i(t) changes abruptly by at least 30 milliamperes.

**5.** Method according to any one of claims 1 to 4, **characterized in that** the continuously detected sensor values i(t) are converted by means of an analog-to-digital converter into discrete-time sensor values i(t), and these are fed to a microcontroller in which the corresponding calculations are then carried out.

**6.** Use of a method according to any one of the preceding claims in the operation of an electrical apparatus in an alternating current network protected by a type A residual current circuit breaker installed at a central point.

**7.** Use according to claim 6, **characterized in that** the electrical device comprises a frequency converter and/or an inverter.

**Revendications**

**1.** Procédé pour faire fonctionner un appareil électrique dans un réseau de courant alternatif, l'appareil étant raccordé au réseau de courant alternatif par l'intermédiaire d'une ligne de raccordement monophasée ou polyphasée, des courants de défaut et/ou des courants de fuite sur la ligne de raccordement étant détectés en continu comme valeur de capteur i(t) au moyen d'un capteur de courant associé à la ligne de raccordement à l'intérieur de l'appareil, **caractérisé en ce qu'**une valeur moyenne dans le temps ($I_{AV}$) et une valeur effective ($I_{RMS}$) sont formées à partir des valeurs de capteur détectées i(t), **en ce qu'**un critère pour la mise hors tension de l'appareil est formé à partir du quotient (Q) de la valeur moyenne ($I_{AV}$) et de la valeur effective ($I_{RMS}$), et **en ce que** l'appareil est déconnecté du secteur alternatif lorsque le critère est rempli.

**2.** Procédé selon la revendication 1, **caractérisé en ce que** l'appareil est déconnecté du secteur alternatif lorsque le quotient (Q) prend une valeur supérieure ou égale à une valeur limite prédéterminée ($G_Q$).

**3.** Procédé selon la revendication 2, **caractérisé en ce que** la valeur limite ($G_Q$) du quotient (Q) est fixée à une valeur comprise entre 0,6 et 0,8.

**4.** Procédé selon l'une quelconque des revendications 1 à 3, **caractérisé en ce que** le dispositif est déconnecté du secteur alternatif en moins de 0,3 seconde si la valeur du capteur i(t) change brusquement d'au moins 30 milliampères.

**5.** Procédé selon l'une quelconque des revendications 1 à 4, **caractérisé en ce que** les valeurs de capteur i(t) détectées en continu sont converties au moyen d'un convertisseur analogique-numérique en valeurs de capteur i(t) à temps discret, et celles-ci sont amenées à un microcontrôleur dans lequel les calculs correspondants sont ensuite effectués.

**6.** Utilisation d'un procédé selon l'une quelconque des revendications précédentes dans le fonctionnement d'un appareil électrique dans un réseau à courant alternatif protégé par un disjoncteur différentiel de type A installé en un point central.

**7.** Utilisation selon la revendication 6, **caractérisée en ce que** le dispositif électrique comprend un convertisseur de fréquence et/ou un onduleur.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014221658 A1
- DE 102007031342 A1

- WO 2008009903 A1